# FASCICULE DE BREVET EUROPEEN

(11) **EP 2 464 957 B1**
(45) Date de publication et mention de la délivrance du brevet: **02.10.2019**
(21) Numéro de dépôt: 10739957.8
(22) Date de dépôt: 10.08.2010
(51) Int. Cl.: G01N 1/31, G01N 35/10

(54) **DISPOSITIF DE TRAITEMENT D'UNE PREPARATION CYTOLOGIQUE OU HISTOLOGIQUE**
VORRICHTUNG ZUR BEHANDLUNG VON CYTOLOGISCHEN ODER HISTOLOGISCHEN PROBEN
APPARATUS FOR TREATMENT OF A CYTOLOGIC OR HISTOLOGIC PREPARATION

(30) Priorité: 10.08.2009 FR 0955605
(43) Date de publication de la demande: 20.06.2012
(73) Titulaire: Assistance Publique Hôpitaux De Paris, 75004 Paris (FR)
(72) Inventeur: De TRAZEGNIES D'ITTRE, François, F-94800 Villejuif (FR)
(74) Mandataire: Camus, Olivier Jean-Claude
(86) Numéro de dépôt international: PCT/EP2010/061651
(87) Numéro de publication internationale: WO 2011/018470

(56) Documents cités:
- EP-A1- 2 071 313
- WO-A2-01/57254
- WO-A2-98/45205
- US-A- 5 595 707
- US-A1- 2002 106 308
- US-A1- 2003 032 191
- US-A1- 2003 081 209
- US-A1- 2006 173 575

## Description

La présente invention se rapporte à un dispositif de traitement d'une préparation cytologique ou histologique.

Un examen cytologique permet notamment de rechercher des cellules anormales, cancéreuses ou précancéreuses, contenues dans des prélèvements d'origine variée: col utérin, corps utérin, expectoration, lavage bronchique et alvéolaire, aspiration bronchique, ponction d'organe à l'aiguille, urines, liquide pleural ou péritonéal. L'examen cytologique le plus fréquent est le frottis du col utérin.

De façon connue, les examens cytologiques consistent à prélever, sur le patient ou dans une cavité de celui-ci, un échantillon contenant des cellules, un tel prélèvement étant par exemple pratiqué au niveau du col de l'utérus, puis à effectuer une ou plusieurs étapes dans le but final d'obtenir une préparation ne contenant que les cellules devant être analysées. Cette préparation cytologique doit ensuite être déposée sur une lame de verre pour former une concentration des cellules obtenue par frottis, empreinte, cytospine ou couche mince, ladite lame étant ensuite traitée par des réactifs pour obtenir une préparation microscopique qui pourra être lue par un médecin anatomo et cytopathologiste.

L'histologie est la branche de la biologie qui étudie les tissus, à mi-chemin entre la cytologie et l'anatomie. Elle a pour but d'explorer la composition, la structure, le renouvellement des tissus, ainsi que les échanges cellulaires en leur sein.

Les techniques d'analyse par coloration citées plus haut dans le cas des prélèvements cytologiques sont également utilisées pour l'analyse de prélèvements histologiques. Le brevet américain US 4,089,989 décrit un appareil pour traiter des échantillons cytologiques, l'appareil comprenant un carrousel et une tête de distribution pour nébulisation.

Un premier procédé connu de coloration pour les techniques d'analyse de prélèvements cytologiques ou histologiques, consiste à réaliser manuellement un certain nombre d'opérations. La coloration est effectuée à l'aide un bac contenant un réactif. On place dans un panier les lames sur lesquelles sont déposées les matières biologiques à examiner. Le panier est ensuite trempé dans le réactif du bac. Le réactif recouvre la matière biologique présente sur les lames et certaines parties de ladite matière biologique se colorent par affinité, réaction chimique ou physique. Après la coloration engendrée par la mise en contact entre le réactif et le prélèvement, la lame est rincée au moins une fois afin d'éliminer l'excès de réactif, puis séchée avant d'être analysée avec un microscope. Dans le cas de l'hémalun, certaines parties de l'hémalun vont se fixer par affinité sur le noyau d'une cellule, le rinçage permet alors d'enlever les parties de l'hémalun présentes autour du noyau. Entre chaque étape de mise en contact du prélèvement avec un réactif coloré, des actions de rinçage, des temps de pose et parfois d'autres réactions chimiques ou physiques sont le plus souvent nécessaires. L'avantage de ce système est que le bac peut contenir plusieurs paniers plongés dans le même réactif, en même temps.

Ce type de procédés manuels présente cependant de nombreux inconvénients.

Un premier inconvénient réside dans le risque de contamination des réactifs. Par exemple, des cellules se décrochent d'une préparation mal fixée, tombent dans le bac de réactif et contaminent ainsi les lames suivantes. Cette contamination fausse alors toutes les analyses, engendrant alors une usure prématurée des réactifs et une importante perte de temps.

En outre, ces procédés manuels d'analyse sont assez longs à mettre en oeuvre et des erreurs liées aux opérations de manipulation des paniers sont possibles.

Une solution connue aux problèmes mentionnés ci-dessus consiste à utiliser des automates de coloration. Une telle solution permet de mettre automatiquement des paniers, contenant des lames avec de la matière biologique, dans des bacs de réactifs. Un bras robotisé déplace le panier de lames avec précision dans l'automate de coloration conformément à un protocole prédéfini. Le traitement simultané d'une pluralité de paniers et de différents programmes est alors possible. L'automate peut également comporter des moyens de séchage et de chauffage des lames. L'automate de coloration permet ainsi d'obtenir une coloration plus rapide et de réduire les risques d'erreurs.

Une telle solution présente toutefois également certains inconvénients.

Ainsi, l'utilisation de bacs entraîne la présence d'une grande quantité de réactif alors qu'une faible quantité de ce même réactif sera effectivement utilisé pour la coloration, cette surconsommation de réactif induisant de fait un surcoût non négligeable.

Ces volumes importants de réactif sont par ailleurs susceptibles d'engendrer des rejets polluants non souhaitables.

En outre, une coupe histologique au microtome possède typiquement une épaisseur de 3 à 6 µm. En préparation microscopique, vue de dessus, une telle coupe paraît sensiblement plane alors qu'elle est en réalité composée de pics et de crevasses. Dès lors, l'utilisation de bacs à simple immersion ne permet pas nécessairement de toucher tous les endroits du relief lors du premier passage dans le bac. Même si les phénomènes de reliefs sont moins importants en cytologie, notamment pour les liquides simples (sang ou liquide céphalo-rachidien LCR par exemple), la présence de fibrine ou de mucosités peut également induire des reliefs pour d'autres types de liquide. Le réactif et la lame sont chargés d'électricité statique. Les charges opposées s'attirent et se repoussent ce qui rend l'accès au réactif sur les crevasses de la coupe plus difficile. Ainsi, un système d'agitation de la lame dans le bac, permet au réactif d'entrer en contact sur toute la coupe. Cette opération est plus ou moins longue en fonction des réactifs utilisés, et est de l'ordre de quelques minutes par lame.

Dans ce contexte, la présente invention vise à fournir un dispositif rapide et efficace de traitement d'une préparation cytologique ou histologique permettant de réduire sensiblement la quantité de réactif utilisé et de rejet polluant, d' assurer une diminution des risques d'erreurs et de contamination et d'atteindre une meilleure qualité de pénétration au sein des prélèvements, en venant directement déposer le réactif notamment dans les crevasses de la coupe. Par ailleurs, cela annule ainsi les charges électrostatiques de la coupe et du réactif.

A cette fin, l'invention propose un dispositif de traitement d'une préparation cytologique ou histologique comportant :
- un carrousel comportant au moins un emplacement apte à recevoir une lame apte à recevoir une préparation cytologique ou histologique, ledit carrousel étant monté rotatif autour d'un axe de rotation ;
- une tête de nébulisation passant au-dessus dudit carrousel, comportant un élément piézoélectrique et un volume d'un réactif de sorte que ladite tête de nébulisation expulse au moins une goutte de réactif sous l'effet de la déformation dudit élément piézoélectrique.

Le dispositif selon l'invention peut également présenter une ou plusieurs des caractéristiques ci-dessous, considérées individuellement ou selon toutes les combinaisons techniquement possibles :
- ledit volume dudit réactif est intégré dans une cartouche ;
- le dispositif selon l'invention comporte une pluralité de cartouches aptes à contenir différents réactifs ;
- le dispositif selon l'invention comporte :
   - des moyens de rinçage aptes à rincer la lame passant à proximité desdits moyens de rinçage ;
   - des moyens de séchage aptes à sécher la lame passant à proximité desdits moyens de rinçage ;
- les moyens de rinçage comportent des moyens pour sélectionner des produits de rinçage et/ou des réactifs non nébulisables ;
- le dispositif selon l'invention comporte un positionneur pour le repérage des lames placées sur le carrousel ;
- le carrousel comporte des moyens de chauffage positionnés sous ledit au moins un emplacement de la lame ;
- Le dispositif selon l'invention comporte :
   ∘ des moyens d'identification aptes à identifier chaque lame, chaque lame étant équipée d'un identifiant ;
   ∘ des moyens d'obtention d'une traçabilité du ou des réactifs auxquels chacune des lames a été soumise.
- La cartouche comporte un système anti-débordement apte à empêcher l'obstruction des buses de la tête de nébulisation par des cristaux de réactifs ;
- Une puce de codage est associée à une cartouche, ladite puce de codage étant apte à émettre des informations de traçabilité concernant ladite cartouche.
- La tête de nébulisation comporte un système de nettoyage automatique ; et
- la tête nébulisation comporte des buses de diamètre d'orifice et de hauteur adaptés en fonction de la viscosité du réactif utilisé.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1, une représentation d'un schéma de principe d'une tête de nébulisation avec un élément piézoélectrique du dispositif selon l'invention ;
- à la figure 2, une représentation schématique d'un exemple de dispositif selon l'invention ;
- à la figure 3, une illustration des différentes étapes du procédé mis en oeuvre par le dispositif selon l'invention ;
- à la figure 4, une représentation schématique détaillée d'un exemple d'une cartouche et d'une tête de nébulisation du dispositif selon l'invention.

Dans toutes les figures, les éléments communs portent les mêmes numéros de référence.

Dans la suite de la description, on entendra par préparation, soit des préparations cytologiques, soit des préparations histologiques, qui sont par exemple :
- soit des coupes de tissus (fixées ou fraiches) ;
- soit des étalements (frottis ou spot de cellules issu d'un liquide de ponction, cytoponction ou d'écoulement naturel).

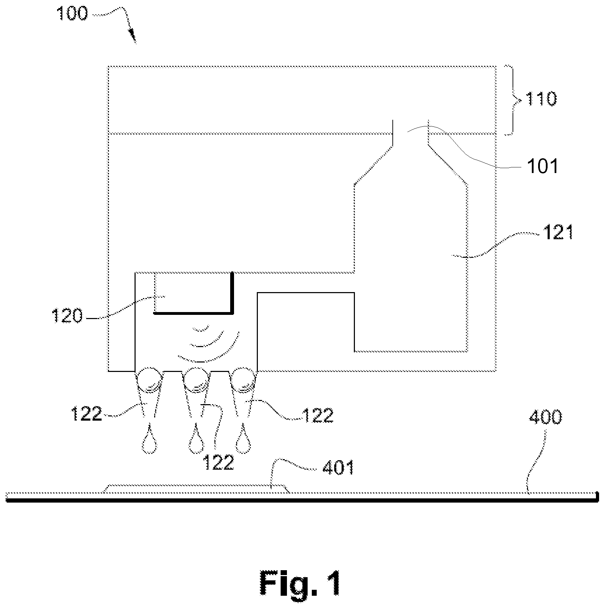

La figure 1 représente un schéma de principe d'une tête de nébulisation 100 avec un élément piézoélectrique 120 du dispositif selon l'invention.

La tête de nébulisation 100 comporte les éléments suivants :
- une cartouche 110, contenant un réactif ;
- une cuve 121, permettant l'arrivée du réactif provenant de la cartouche 110 ;
- un élément piézoélectrique 120 tel qu'un cristal piézoélectrique ;
- une pluralité de buses (dits également injecteurs) 122 (ici trois buses sont représentées mais il suffit d'avoir au moins une buse pour la mise en oeuvre du procédé décrit).

Une lame 400, sur laquelle est déposée une préparation 401, se situe en-dessous des buses 122.

La cartouche 110 contient un réactif apte à entraîner une réaction telle qu'une coloration lors de sa mise en contact avec la préparation 401.

Dans un mode de réalisation non limitatif, le réservoir de la cartouche 110 est réalisé dans un matériau résistant à l'agressivité des réactifs contenus dans ladite cartouche 110. Chaque tête de nébulisation 100 comporte une unique cartouche 110.

La cuve 121 permet de guider le réactif provenant de la cartouche 110, jusqu'aux buses 122.

Le cristal piézoélectrique 120 est électrisé via un champ électrique appliqué par des moyens de commande électrique non représentés et est ensuite défléchi. Cette déflexion crée une pression qui provoque l'éjection du réactif au travers des buses 122.

Les buses 122 forment des gouttes de réactif parfaitement rondes qui sont ensuite expulsées sous l'effet de la déformation du cristal piézoélectrique 120 lorsque ce dernier est soumis à un champ électrique. On notera que la taille des gouttes est fixée en fonction de l'intensité du champ électrique appliqué.

Chaque cartouche 110 contient un type de réactif, ladite cartouche 110 étant à usage unique. Selon un autre mode de réalisation, les réactifs peuvent être contenus dans des réservoirs auxiliaires permettant la recharge automatique des cartouches sans avoir à les manipuler.

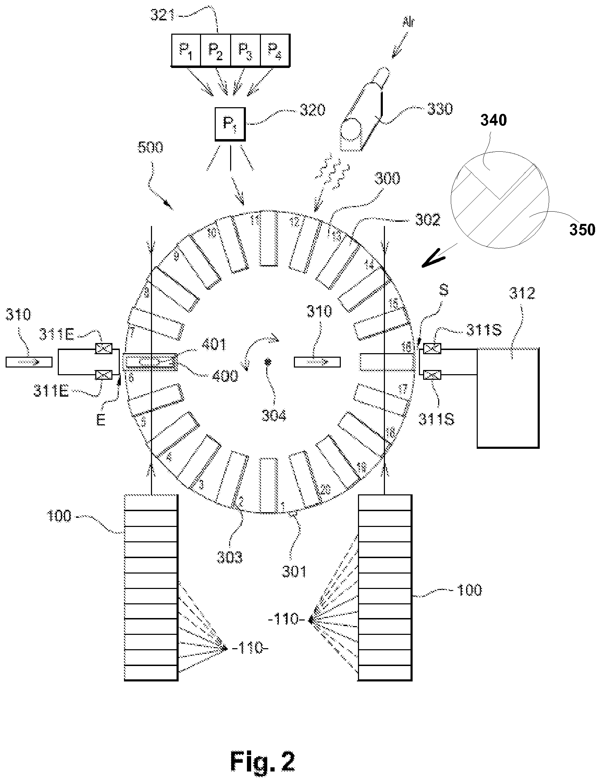

La figure 2 représente schématiquement un exemple d'un dispositif 500 de traitement cytologique ou histologique selon l'invention.

Le dispositif 500 est un automate comportant les éléments suivants :
- un carrousel 300 comportant un axe de rotation 304 ;
- une pluralité d'emplacements 302 aptes à recevoir une lame 400 (au moins un emplacement est nécessaire) ;
- un positionneur 301 ;
- un pousse-lame 310,
- des capteurs d'entrée 311E et de sortie 311S ;
- un convoyeur 312 ;
- des moyens de rinçage 320 utilisant des produits 321 de rinçage et/ou des réactifs non nébulisables ;
- des moyens de séchage 330 ;
- une tête de nébulisation 100 telle que celle décrite en référence à la figure 1 pour chaque réactif.

La lame 400 sur laquelle a été déposée la préparation 401 est insérée dans un panier, non représenté. Le panier contenant au moins une lame 400 est ensuite placé en entrée E du dispositif 500. Le pousse-lame 310 pousse la lame 400 sélectionnée dans le panier, vers les capteurs d'entrée 311E. Les capteurs d'entrée 311E servent de guide pour accompagner la lame 400 sur l'emplacement 302 du carrousel 300. L'emplacement 302 est alors identifié par un numéro (de 1 à 20) par rapport au positionneur 301 permettant de repérer les lames 400 sur le carrousel 300 (la lame est ici placée sur l'emplacement 302 en position 6). De plus, chaque lame 400 est identifiée par un numéro ou un code barre unique. L'identifiant permet par exemple de connaître le type de prélèvement 401 collé sur la lame 400, le nom du patient et le type d'examen auquel est soumis le prélèvement 401. L'automate 500 comporte dans ce cas des moyens d'identification permettant d'obtenir une traçabilité des réactifs auxquels la lame 400 a été soumise pendant l'analyse ainsi que des informations relatives au patient. Ces moyens sont typiquement des moyens logiciels mis en oeuvre par ordinateur.

Lorsque la lame 400 est positionnée sur son emplacement 302, la tête de nébulisation 100 comportant la cartouche 110 et le réactif choisi, passe au-dessus de la lame 400, et par excitation électrique entraînant le déplacement du cristal piézoélectrique 120, dépose au moins une goutte de réactif sur la préparation 401. Pour ce faire, la tête 100 se déplace en translation au-dessus du carrousel 300.

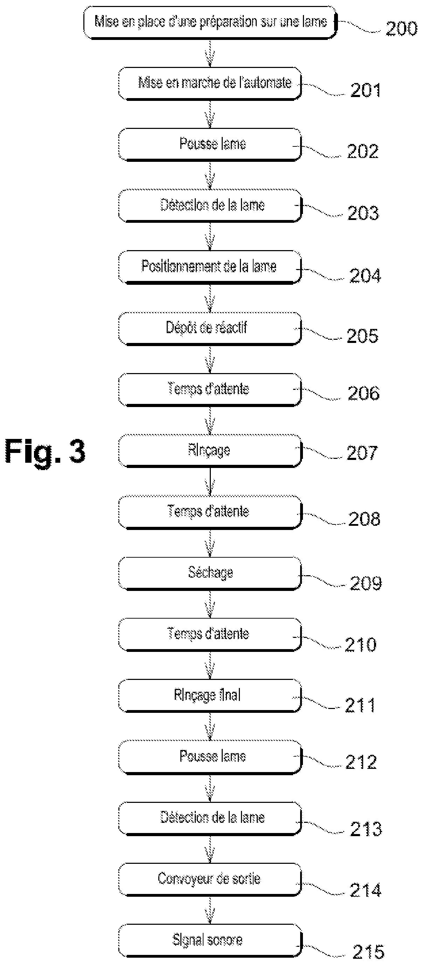

Le carrousel 300 tourne dans un sens horaire ou antihoraire, autour de l'axe de rotation 304. La rotation du carrousel 300 permet de laisser un temps d'attente avant une étape de rinçage (un exemple de procédé comportant une telle étape 207 sera décrit en référence à la figure 3).

Les moyens de rinçage 320 comportent des moyens pour sélectionner des produits 321. Les produits 321 sont soit des produits de rinçage comme par exemple, de l'alcool à 70, 95 ou 100°C, de l'eau acétifiée, ou de l'eau ; soit des réactifs comme par exemple du carbonate de lithium, de l'alcool ammoniacal ou une solution acide. Les réactifs présents dans les moyens de rinçages 320 sont des réactifs non nébulisables (i.e. ils comportent des éléments solides susceptibles d'obstruer les buses de la tête de nébulisation). Un bac de récupération et d'évacuation 340 des excès de réactifs et de produits de rinçage 321 est situé sous l'emplacement des lames au niveau des moyens de rinçage 320 et de chauffage 330, et plus particulièrement sous les lames qui sont en position 9 à 12 (tel qu'illustré sur la figure 2).

Les produits 321 sont aspirés par une pompe volumétrique (Quatre pompes P1 à P4 sont ici représentées) avant d'être déposés sur la préparation 401. Afin d'éviter que les produits 321 se mélangent et créent une réaction chimique pouvant entrainer l'obstruction des ouvertures de la pompe volumétrique, les moyens de rinçage 320 comportent une pompe unique pour chaque produits 321. La pompe volumétrique contient entre 5 et 10 millilitres de produit de rinçage et environ 2 millilitres pour un réactif. Le rinçage de la lame 400 est effectué sans pression afin de ne pas décoller la préparation 401.

Une nouvelle rotation du carrousel 300 permet de placer la lame 400 à proximité des moyens de séchage 330. Les moyens de séchage 330 sont par exemple un séchage à l'air. De plus, dans l'enceinte du dispositif 500 il est utile pour les préparations 401 de garder un taux d'humidité assez élevé, notamment compris entre 60% et 70%. Un bac à eau 350 est donc installé pour régulariser l'hygrométrie à l'intérieur du dispositif 500 permettant ainsi de ne pas assécher les préparations 401 et d'éviter l'évaporation des réactifs. Le bac à eau peut être placé par exemple sous l'emplacement des lames.

Dans l'exemple illustré à la figure 2, le bac à eau 350 et le bac de récupération et d'évacuation 340 forment un unique bac cylindrique. Ce bac est situé sous le carrousel 300.

Le carrousel 300 tourne à nouveau afin que la lame 400 soit placée face à la sortie S dudit carrousel 300. La lame 400 est poussée par le pousse-lame 310, insérant ladite lame 400 dans le panier et faisant passer ledit panier devant les capteurs de sortie 311S. Le panier sort ainsi de l'automate 500 par le convoyeur 312 de sortie permettant à l'utilisateur de récupérer la lame 400.

L'enceinte de l'automate 500 comporte un filtre non représenté afin de filtrer l'air contenu dans l'automate 500 et de ne pas perturber les analyses des préparations 401. Le filtre est notamment en charbon actif. Le charbon actif piège les solvants actifs, l'alcool, les produits chimiques, et permet ainsi de protéger les utilisateurs des odeurs dégagées pas les réactifs.

Selon un autre mode de réalisation, le dispositif 500 comporte des moyens chauffant 303 placés sous les emplacements 302 pour l'analyse de certaines préparations 401, par exemple lors de l'utilisation de nitrate d'argent. Ainsi, en chauffant de manière indépendante chaque lame, le dispositif de traitement 500 peut réaliser des colorations de type argentique.

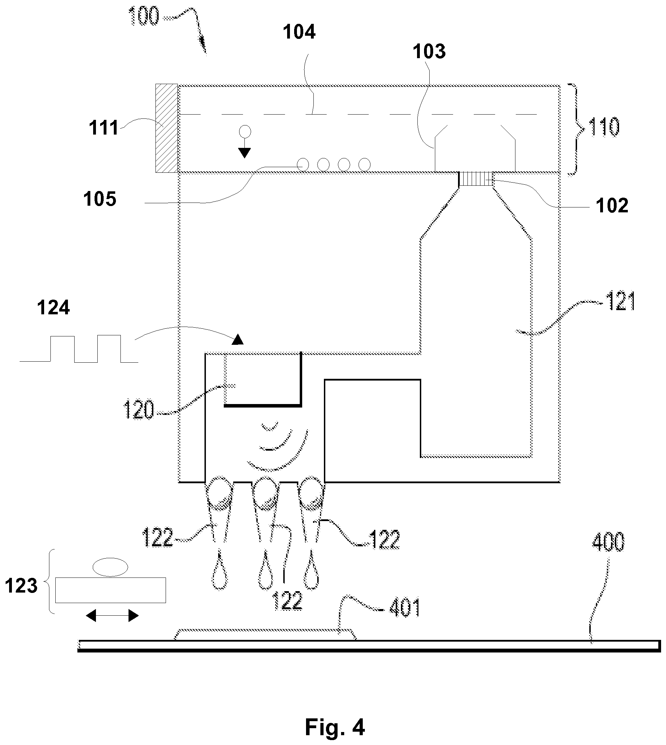

La figure 4 représente schématiquement un exemple d'une cartouche 110 et d'une tête de nébulisation 100 du dispositif 500.

On notera que sur la figure 4 (comme sur la figure 1), les dimensions de la cartouche 110 et de la partie cuve 121 ensemble élément piézo-électrique 120 ensemble buses 122 sont purement schématiques et n'illustrent pas les dimensions réelles de ces éléments. En pratique, la cartouche comporte une dimension plus grande que l'ensemble cuve-élément piézo-électrique-buses. Une cartouche 110 est représentée avec un niveau de réactif 104 (illustré sur la figure 4 par une ligne de traits discontinus dans la cartouche 110).

Le réactif 104, non utilisé pendant un certain temps, créé un volume mort. Un volume mort est créé par cristallisation du réactif ou par précipitation normale du réactif. A ce moment, dans le cas de la cristallisation, des cristaux 105 de réactifs 104 se forment sur les parois et tombent au fond du réservoir de ladite cartouche 110, et dans le cas de la précipitation, un dépôt de réactif tombe au fond du réservoir de ladite cartouche 110, ce qui pourrait obstruer les buses 122 de la tête de nébulisation 100.

L'obstruction des buses 122 intervient également lors d'une utilisation prolongée de la tête de nébulisation ou à l'arrêt du dispositif 500.

Afin d'éviter d'obstruer les buses 122 de la tête de nébulisation 100, la tête de nébulisation 100 comporte :
- un système anti-débordement ;
- un système de nettoyage automatique.

Dans des modes de réalisation non limitatifs, le système anti-débordement peut être :
- une barrière à cristaux 103 compris dans la cartouche 110 et située à l'entrée d'un passage 101 entre la cartouche 110 et la cuve 121. Dans un exemple non limitatif, la barrière à cristaux 103 est de forme cylindrique et comporte une hauteur prédéterminée, permettant d'empêcher l'accès des cristaux 105 à la cuve 121 et donc aux buses 122. La barrière à cristaux 103 est réalisée de façon à laisser passer le réactif 104 et à retenir les cristaux 105. La barrière à cristaux 103 est réalisé dans un matériau qui est un métal résistant aux agressions du réactif 104; et/ou
- un filtre 102 (illustré en zone hachurée verticales sur la Fig. 4) placé dans le passage 101 entre la cartouche 110 et la cuve 121. Dans des exemples non limitatifs, le filtre peut être :
   ∘ métallique comportant des orifices assez petits empêchant ainsi l'entrée des cristaux 105 dans le passage 101.
   ∘ composé de papier imputrescible.

On notera que la barrière de cristaux 103 et le filtre 102 peuvent être utilisés en combinaison.

On notera que dans un mode de réalisation non limitatif, on peut également utiliser un filtre 102 au niveau de la buse 122 elle-même.

Dans des modes de réalisation non limitatifs, le système de nettoyage automatique peut être :
- Une éponge 123 placée à hauteur des buses 122 sur un système se déplaçant en translation horizontale. Ainsi le passage de l'éponge permet de venir absorber les gouttes de réactif 104 à l'entrée des buses 122, débouchant les buses 122 de la tête de nébulisation 100. L'éponge comporte une pluralité de petits orifices permettant d'absorber au mieux les entrées des buses 122.
- Un programme « d'auto-nettoyage » 124 qui agit sur l'élément piézo-électrique 120 en :
   ∘ envoyant un signal négatif en fin de coloration. Le signal négatif est un signal qui permet à l'élément piézo-électrique de s'arrêter sur un front descendant ou bas. Cela permet d'avoir le moins de réactif en sortie des buses, une goutte de réactif n'étant pas expulsée de la buse et s'arrêtant à ce moment à l'entrée de la buse 122 ; et ensuite
   ∘ envoyant un signal de décrassage qui permet d'expulser une grosse goutte de réactif pour déboucher la buse et de déposer une grosse quantité de réactif dans une poubelle.

On notera que sur un front montant, l'élément piézo-électrique est compressé et la goutte de réactif est expulsée, tandis que sur un front descendant, l'élément piézo-électrique est décompressé et la goutte de réactif n'est pas expulsée.

On notera que, dans un mode de réalisation non limitatif, les cartouches 110 et la tête de nébulisation 100 peuvent être solidaires. Cela permet l'utilisation d'une tête de nébulisation 100 neuve à chaque changement de cartouche 110. On change ainsi souvent de tête de nébulisation. Il y a donc moins de risque d'obstruction des buses.

Dans un mode de réalisation non limitatif, la tête de nébulisation 100 peut comporter un dispositif anti-retour qui empêche à une goutte de réactif de retourner vers la cuve 121 lorsque l'élément piézo-électrique est déformé. Cela assure que la goutte est expulsée via les buses 122. Dans un exemple non limitatif, le dispositif anti-retour peut être un clapet placé entre la cuve 121 et l'élément piézo-électrique 120.

Dans un mode de réalisation non limitatif, à chaque cartouche 110 est associée une puce de codage 111. Cette puce de codage permet d'émettre des informations de traçabilité concernant ladite cartouche 110. Ainsi, ces informations peuvent être :
- le numéro de lot du réactif dans la cartouche ;
- le niveau de réactif dans la cartouche ;
- le type de réactif dans la cartouche ;
- la date de péremption du réactif etc.

On notera que les réactifs 104 comportent des caractéristiques différentes, notamment en ce qui concerne leur viscosité.

Aussi, la buse 122 d'une tête de nébulisation est adaptée à la viscosité du réactif 104. Le diamètre de l'orifice de la buse 122 de la tête de nébulisation 100, sera donc plus ou moins important selon la viscosité du réactif 104. Par exemple une buse 122 de petit diamètre sera adaptée pour des réactifs 104 peu visqueux, une buse 122 de diamètre moyen sera adaptée pour des réactifs 104 moyennement visqueux et une buse 122 de grand diamètre sera adaptée pour des réactifs 104 très visqueux.

De plus, la hauteur entre la tête de nébulisation 100 et la préparation 401 est adaptée en fonction du type de réactif 104 utilisé. Trop proche, des risques d'arrachage de cellules sur la préparation 401 sont possibles. Trop écartée, des zones mortes entre les dépôts de réactifs (dépôt appelé spot) peuvent apparaître.

On notera qu'une zone morte est un espace non couvert entre quatre dépôts de réactifs. On notera qu'un deuxième passage de nébulisation avec un léger décalage de la tête de nébulisation par rapport à un premier passage peut être utile pour éviter les zones mortes.

La figure 3 illustre les différentes étapes du procédé de traitement mis en oeuvre par le dispositif selon l'invention.

Les différentes étapes du procédé ont un ordre spécifique en fonction des techniques utilisées. A titre purement illustratif, un ordre d'étapes est décrit dans ce qui suit afin de mieux comprendre le procédé.

Le procédé de traitement d'une préparation 401 comporte les étapes suivantes :
- Dans une étape 200, dite de mise en place d'une préparation sur une lame 400, la préparation 401 est déposée sur la lame 400, puis ladite lame 400 est placée dans un panier situé à l'entrée E d'un automate tel que le dispositif 500 décrit en référence à la figure 2 ;
- Dans une étape 201, dite de mise en marche de l'automate, l'opérateur lance l'automate 500 ;
- Dans une étape 202, dite de pousse-lame, la lame 400, placée dans le panier situé à l'entrée E de l'automate 500, est poussée par le pousse-lame 310 afin d'entrer dans ledit automate 500 ;
- Dans une étape 203, dite de détection de la lame, les capteurs 311E placés à l'entrée E de l'automate 500, après le pousse-lame 310, détectent l'arrivée de la lame 400 ; de plus, les capteurs 311E servent de guide pour la lame 400 ;
- Dans une étape 204, dite de positionnement de la lame, après la détection de la lame 400, ladite lame 400 est alors positionnée sur un emplacement 302 du carrousel 300 ;
- Dans une étape 205, dite de dépôt de réactif, une fois la lame 400 à son emplacement 302, un passage de la tête de nébulisation 100 au-dessus de la lame 400 dépose au moins une goutte de réactif sur la préparation 401 par excitation électrique de l'élément piézoélectrique 120 ;
- Dans une étape 206, dite de temps d'attente, après le dépôt de réactif, on laisse un temps d'attente préalablement déterminé et nécessaire pour l'établissement de la réaction de coloration ;
- Dans une étape 207, dite de rinçage, la préparation 401 ainsi colorée est alors placée devant le moyen de rinçage 320 comportant des moyens de sélection des produits 321 ;
- Dans une étape 208, dite de temps d'attente, un temps d'attente préalablement déterminé est à respecter entre les deux étapes 207 et 209 du procédé ;
- Dans une étape 209, dite de séchage, la préparation 401 ainsi rincée est alors placée devant le moyen de séchage 330, notamment à l'air ;
- Dans une étape 210, dite de temps d'attente, un temps d'attente préalablement déterminé est à respecter entre les deux étapes 209 et 211 du procédé ;
- Dans une étape 211, dite de rinçage final, la préparation 401 est placée une dernière fois devant le moyen de rinçage 320 avant d'être analysée ;
- Dans une étape 212, dite de pousse-lame, la lame 400 placée sur l'emplacement 302 du carrousel 300 est poussée par le pousse-lame 310 afin de sortir de dudit emplacement 302 ;
- Dans une étape 213, dite de détection de la lame, les capteurs 311S placés à la sortie S de l'automate 500, après le pousse-lame 310, détectent la sortie de la lame 400 et guident la lame 400 dans le panier ;
- Dans une étape 214, dite de convoyeur de sortie, la lame 400 sortant de l'automate 500 est alors placée sur le convoyeur 312 permettant de sortir entièrement ladite lame 400 dudit automate 500 ;
- Dans une étape 215, dite d'émission de signal sonore, la lame 400 sortant de l'automate 500 est alors signalée à l'opérateur par un signal tel qu'un signal sonore ou visuel.

Des étapes supplémentaires peuvent venir compléter le procédé, par exemple :
- une étape de nettoyage de la tête de nébulisation 100 permet, à la fin de l'utilisation de l'automate 500, d'éviter que les résidus de réactifs obstruent les buses 122 ;
- une étape d'évacuation des excès de réactifs et/ou de produits 321 de rinçage.

On utilise ainsi la technologie dite de « la goutte à la demande » (DOD ou « Drop On Demand » en anglais) par piézoélectrique pour l'appliquer à l'analyse de lames de cytologie ou d'histologie. Cette technologie de nébulisation est particulièrement adaptée à ce type d'analyse cytologique ou histologique contrairement à d'autres technologies de nébulisation telles que la technique par injection thermique qui consiste à faire chauffer le produit à expulser sous pression et qui présente deux inconvénients majeurs : la nécessité de faire chauffer le produit à expulser est incompatible avec les réactifs utilisés en analyses histologiques ou cytologiques et le fait que la taille des gouttes expulsées est fixe. Au contraire, la technologie DOD par piézoélectrique ne nécessite aucun chauffage et permet, selon l'intensité du signal électrique envoyé au élément piézoélectrique, d'obtenir des tailles de gouttes différentes.

L'intérêt de la nébulisation des réactifs est de toucher tous les endroits d'un relief au premier passage, ce qui permet un gain de temps en comparaison du contact coupe-réactif par simple immersion. La tension superficielle des réactifs, ainsi que les charges électrostatiques cellule/lame/réactif sont réduites au maximum, ce qui permet une qualité de pénétration particulièrement efficace. Le procédé pourrait même réduire le freinage de la pénétration des réactifs au sein des cellules du aux substances lipidiques.

Ce procédé peut très facilement être automatisé au sein d'un automate intégrant des systèmes de rinçage, de chauffage et/ou de contrôle de paramètres physiques (chaleur, temps), comme indiqué ci-dessus.

Enfin, le fait d'utiliser des gouttes de réactifs permet une économie substantielle de réactifs et une diminution importante des éventuels rejets polluants.

L'automate est capable d'analyser des lames dans le domaine de la coloration standard, comme les HES (Hémalun, Eosine, Safran), ou pour des réalisations plus spécifiques. Le procédé est aussi utilisable pour des applications avec des coupes au cryostat.

Le panier comporte plusieurs lames, par exemple vingt lames pour un automate comportant vingt emplacements. L'automate comporte alors des moyens de détection et de sélection permettant de détecter une lame donnée et de l'insérer dans l'automate.

Lorsqu'une lame doit être analysée d'urgence, l'opérateur peut modifier le parcours des lames afin que la lame à traiter d'urgence soit analysée plus rapidement.

Les cartouches des têtes de nébulisation sont suivies pour connaitre leur niveau ainsi que la dernière date à laquelle elles ont été changées. Le suivi des réactifs peut être obtenu à partir des moyens d'identification permettant d'obtenir une traçabilité des réactifs auxquels les lames ont été soumises.

Selon un autre mode de réalisation, l'automate peut être un automate linéaire de sorte que la lame se déplace le long de l'automate pour suivre les différentes étapes du procédé ; mis à part le carrousel, cet automate linéaire comporte les mêmes moyens que l'automate 500 décrit en référence à la figure 2. Il peut toutefois être réalisé de manière plus compacte que l'automate 500 de la figure 2. De plus, un système comportant une pluralité de bacs peut être placé à l'extérieur du dispositif 500 permettant de déparaffiner des lames 400 comportant une préparation 401 avant d'être soumises au(x) réactif(s). Notamment, le système comporte un bac de xylène, un bac d'alcool et un bac d'eau. Le déparaffinage est notamment utile pour le traitement d'une préparation histologique. Le déparaffinage étant connu de l'homme du métier, il n'est pas décrit en détail ici.

Ainsi, le dispositif de traitement est adapté notamment à la cytologie comme au travail sur coupe fraîche issue de cryostat « examens extemporanés ». Le dispositif de traitement est également adapté à l'immuno-histochimie et au domaine de la chimie.

## Revendications

1. Dispositif (500) de traitement d'une préparation (401) cytologique ou histologique **caractérisé en ce que** ledit dispositif (401) comporte :
- un carrousel (300), comportant au moins un emplacement (302) apte à recevoir une lame (400) apte à recevoir une préparation (401) cytologique ou histologique, ledit carrousel (300) étant monté rotatif autour d'un axe de rotation (304) ;
- une tête de nébulisation (100) passant au-dessus dudit carrousel (300), comportant un élément piézoélectrique (120) et un volume d'un réactif de sorte que ladite tête de nébulisation (100) expulse au moins une goutte de réactif sous l'effet de la déformation dudit élément piézoélectrique (120).

2. Dispositif (500) selon la revendication 1, **caractérisé en ce que** ledit volume dudit réactif est intégré dans une cartouche (110).

3. Dispositif (500) selon la revendication précédente caractérisé en qu'il comporte une pluralité de cartouches (110) aptes à contenir différents réactifs.

4. Dispositif (500) selon l'une quelconque des revendications précédentes **caractérisé en ce qu'**il comporte :
- des moyens de rinçage (320) aptes à rincer la lame (400) passant à proximité desdits moyens de rinçage (320) ;
- des moyens de séchage (330) aptes à sécher la lame (400) passant à proximité desdits moyens de rinçage (330) ;

5. Dispositif (500) selon la revendication précédente **caractérisé en ce que** les moyens de rinçage (320) comportent des moyens pour sélectionner des produits (321) de rinçage et/ou des réactifs non nébulisables.

6. Dispositif (500) selon l'une quelconque des revendications précédentes **caractérisé en ce qu'**il comporte un positionneur (301) pour le repérage des lames (400) placées sur le carrousel (300).

7. Dispositif (500) selon l'une quelconque des revendications précédentes, **caractérisé en ce que** le carrousel (300) comporte des moyens de chauffage (303) positionnés sous ledit au moins un emplacement (302) de la lame (400).

8. Dispositif (500) selon l'une quelconque des revendications précédentes, **caractérisé en ce qu'**il comporte :
- des moyens d'identification aptes à identifier chaque lame (400), chaque lame (400) étant équipée d'un identifiant ;
- des moyens d'obtention d'une traçabilité du ou des réactifs auxquels chacune des lames a été soumise.

9. Dispositif (500) selon l'une quelconque des revendications précédentes 2 à 8, **caractérisé en ce que** la cartouche (110) comporte un système anti-débordement (102, 103) apte à empêcher l'obstruction des buses (122) de la tête de nébulisation (100) par des cristaux de réactifs (104).

10. Dispositif (500) selon l'une quelconque des revendications précédentes 2 à 9, **caractérisé en ce qu'**une puce de codage (111) est associée à une cartouche (110), ladite puce de codage (111) étant apte à émettre des informations de traçabilité concernant ladite cartouche (110).

11. Dispositif (500) selon l'une quelconque des revendications précédentes, **caractérisé en ce que** la tête de nébulisation (100) comporte un système de nettoyage automatique (123, 124).

12. Dispositif (500) selon l'une quelconque des revendications précédentes, **caractérisé en ce que** la tête nébulisation (100) comporte des buses (122) de diamètre d'orifice et de hauteur adaptés en fonction de la viscosité du réactif (104) utilisé.

## Patentansprüche

1. Verarbeitungsvorrichtung (500) einer zytologischen oder histologischen Zubereitung (401), **dadurch gekennzeichnet, dass** die genannte Vorrichtung (401) umfasst:
- ein Karussell (300), umfassend wenigstens eine Stelle (302), die geeignet ist, um eine Klinge (400) aufzunehmen, die geeignet ist, um eine zytologische oder histologische Zubereitung (401) zu empfangen, wobei das genannte Karussell (300) drehbar um eine Drehachse (304) montiert ist;
- einen Sprühkopf (100), der oberhalb des genannten Karussells (300) verläuft, umfassend ein piezoelektrisches Element (120) und ein Volumen eines Reagens derart, dass der genannte Sprühkopf (100) wenigstens einen Reagenstropfen unter der Wirkung der Verformung des genannten piezoelektrischen Elements (120) ausstößt.

2. Vorrichtung (500) gemäß Anspruch 1, **dadurch gekennzeichnet, dass** das genannte Volumen des genannten Reagens in eine Patrone (110) eingebaut ist.

3. Vorrichtung (500) gemäß dem voranstehenden Anspruch, **dadurch gekennzeichnet, dass** sie eine Vielzahl von Patronen (110) umfasst, die geeignet sind, verschiedene Reagenzien zu enthalten.

4. Vorrichtung (500) gemäß irgendeinem der voranstehenden Ansprüche, **dadurch gekennzeichnet, dass** sie umfasst:
- Spülmittel (320), die geeignet sind, die Klinge (400) zu spülen, die in der Nähe der genannten Spülmittel (320) vorbeifahren;
- Trocknungsmittel (330), die geeignet sind, die Klinge (400) zu trocknen, die in der Nähe der genannten Spülmittel (330) vorbeifahren.

5. Vorrichtung (500) gemäß dem voranstehenden Anspruch, **dadurch gekennzeichnet, dass** die Spülmittel (320) Mittel zum Auswählen der Spülprodukte (321) und / der nicht sprühfähigen Reagenzien umfassen.

6. Vorrichtung (500) gemäß irgendeinem der voranstehenden Ansprüche, **dadurch gekennzeichnet, dass** sie einen Positionierer (310) für die Kennzeichnung der Klingen (400) umfasst, die auf dem Karussell (300) platziert sind.

7. Vorrichtung (500) gemäß irgendeinem der voranstehenden Ansprüche, **dadurch gekennzeichnet, dass** das Karussell (300) Heizmittel (303) umfasst, die unter der genannten wenigstens einen Stelle (302) der Klinge (400) positioniert sind.

8. Vorrichtung (500) gemäß irgendeinem der voranstehenden Ansprüche, **dadurch gekennzeichnet, dass** sie umfasst:
- Identifizierungsmittel, die geeignet sind, jede Klinge (400) zu identifizieren, wobei jede Klinge (400) mit einer Kennung ausgerüstet ist;
- Mittel zum Erhalten einer Rückverfolgbarkeit des oder der Reagenzien, denen jede Klinge unterzogen wurde.

9. Vorrichtung (500) gemäß irgendeinem der voranstehenden Ansprüche 2 bis 8, **dadurch gekennzeichnet, dass** die Patrone (110) ein Überlaufschutz-System (102, 103) umfasst, das geeignet ist, die Verstopfung der Düsen (122) des Sprühkopfes (100) durch Reagenskristalle (104) zu verhindern.

10. Vorrichtung (500) gemäß irgendeinem der voranstehenden Ansprüche 2 bis 9, **dadurch gekennzeichnet, dass** ein Codierungschip (111) einer Patrone (110) zugeordnet ist, wobei der genannte Codierungschip (111) geeignet ist, Rückverfolgungsinformationen hinsichtlich der genannten Patrone (110) auszugeben.

11. Vorrichtung (500) gemäß irgendeinem der voranstehenden Ansprüche, **dadurch gekennzeichnet, dass** der Sprühkopf (100) ein automatisches Reinigungssystem (123, 124) umfasst.

12. Vorrichtung (500) gemäß irgendeinem der voranstehenden Ansprüche, **dadurch gekennzeichnet, dass** der Sprühkopf (100) Düsen (122) mit einem Öffnungs- und Höhendurchmesser umfasst, die in Abhängigkeit von der Viskosität des verwendeten Reagens (104) angepasst sind.

## Claims

1. A device (500) for treating a cytological or histological preparation (401) **characterised in that** said device (401) includes:
- a carousel (300), including at least one location (302) able to receive a blade (400) able to receive a cytological or histological preparation (401), said carousel (300) being rotatably mounted about an axis of rotation (304);
- a nebulising head (100) passing above said carousel (300), including a piezoelectric element (120) and a volume of a reagent such that said nebulising head (100) expulses at least one reagent droplet under the effect of the deformation of said piezoelectric element (120).

2. The device (500) according to claim 1, **characterised in that** said volume of said reagent is integrated in a cartridge (110).

3. The device (500) according to the preceding claim, **characterised in that** it includes a plurality of cartridges (110) able to contain different reagents.

4. The device (500) according to any of the preceding claims, **characterised in that** it includes:
- rinsing means (320) able to rinse the blade (400) passing in the proximity of said rinsing means (320);
- drying means (330) able to dry the blade (400) passing in the proximity of said rinsing means (330).

5. The device (500) according to the preceding claim, **characterised in that** the rinsing means (320) comprise means for selecting rinsing products (321) and/or non-nebulisable reagents.

6. The device (500) according to any of the preceding claims, **characterised in that** it includes a positioner (301) for registering the blades (400) placed on the carousel (300).

7. The device (500) according to any of the preceding claims, **characterised in that** the carousel (300) includes heating means (303) positioned under said at least one location (302) of the blade (400).

8. The device (500) according to any of the preceding claims, **characterised in that** it includes:
- identification means able to identify each blade (400), each blade (400) being equipped with an identifier;
- means for obtaining a traceability of the reagent(s) to which each of the blades has been subjected.

9. The device (500) according to any of the preceding claims 2 to 8, **characterised in that** the cartridge (110) includes an anti-overflow system (102, 103) able to prevent the nozzles (122) of the nebulising head (100) from being obstructed by crystals of reagents (104).

10. The device (500) according to any of the preceding claims 2 to 9, **characterised in that** a coding chip (111) is associated with a cartridge (110), said coding chip (111) being able to emit traceability information regarding said cartridge (110).

11. The device (500) according to any of the preceding claims, **characterised in that** the nebulising head (100) includes an automatic washing system (123, 124).

12. The device (500) according to any of the preceding claims, **characterised in that** the nebulising head (100) includes nozzles (122) with a port diameter and a height adapted as a function of the viscosity of the reagent (104) used.
